# EUROPEAN PATENT SPECIFICATION

(11) **EP 1 421 417 B1**
(45) Date of publication and mention of the grant of the patent: **22.03.2006**
(21) Application number: 02755240.5
(22) Date of filing: 23.08.2002
(51) Int. Cl.: G02B 6/00, B23K 26/06, B23K 26/36

(54) **METHOD FOR MANUFACTURING AN OPTICAL FIBRE DEVICE HAVING A CAVITY**
HERSTELLUNGSVERFAHREN EINER OPTISCHEN FASER VORRICHTUNG MIT HOHLRAUM
PROCEDE DE REALISATION DE DISPOSITIF A FIBRE OPTIQUE A CAVITE

(30) Priority: 23.08.2001 GB 0120577
(43) Date of publication of application: 26.05.2004
(73) Proprietor: CRANFIELD UNIVERSITY, Shrivenham, Swindon SN6 8LA (GB)
(72) Inventor: TUCK, Christopher, c/o Cranfield University, Swindon, Wiltshire SN6 8LA (GB)
(74) Representative: Newell, William Joseph
(86) International application number: PCT/GB2002/003902
(87) International publication number: WO 2003/019250

(56) References cited:
- EP-A- 0 959 051
- WO-A-00/48024
- US-A- 4 626 652
- US-A- 5 130 512
- US-A- 5 149 937
- US-A- 5 313 043
- US-A- 5 368 900
- US-A- 5 489 988
- US-A- 5 948 289

## Description

The present invention relates to a method for use in manufacturing an optical fibre device.

Some optical devices, such as optical sensors, e.g. Fabry-Perot etalons, are produced by forming cavities in optical substrates.

A Fabry-Perot etalon comprises a cavity between two interfaces which are produced either at the boundary of materials of different refractive indices or by the use of semi-reflective mirrors. Light incident on the Fabry-Perot etalon is partially reflected at each interface of the cavity. The reflected waves interfere as a consequence of the phase change that is induced between them by the length of, and material within, the cavity, and form a fringe pattern when collected at a detector. Demodulation of the said fringe pattern allows precise determination of the characteristics associated with the radiation incident on the Fabry-Perot etalon.

Fabry-Perot etalons are produced commercially using optical fibres and including one of the following methods:
fusion splicing a fibre insert to the coated ends of "lead in" and "lead out" fibres, whereby the fibre insert and the lead in/out fibres can be made of the same, or different, material; or
bonding lead in and lead out fibres, separated by an air-gap, within the bore of a microcapillary; or
fusion splicing a hollow core fibre to adjacent lead in and lead out fibres.

Although the above described methods can be adequately used to manufacture Fabry-Perot etalons, they are non-trivial: they impose the need for a number of components, expensive optical equipment such as fusion splicers and an operator skilled in the technology.

US-A-5130512 discloses a method of making fibre couplers and mode scramblers ablating part of the cladding of an optical fibre through a "milling aperture". The cladding of the fibres described are of a polymer material that can be easily ablated, while the cores are of a material that is not substantially affected by the ablation. US-A-4626652 discloses a method of making fibre couplers ablating part of the cladding of an optical mask made of silica material by scanning the ablating beam along the fibre instead of using a mask. US-A-5857053 discloses a method of making an optical fibre filter by removing part of the cladding of an optical device, by mechanical or chemical stripping or by chemical etching. In the filter described, some of the radiation travelling along the fibre is transmitted through the etched cladding portion, whilst some of it is not guided in that portion and is therefore lost.

According to the present invention, there is provided a method for manufacturing a Fabry-Perot etalon, which method comprises the steps of:
forming a cavity of a desired shape in an optical fibre made of silica material by irradiating, with radiation from a laser source, a mask whose surface is patterned in accordance with the desired shape of the cavity; and
projecting the radiation transmitted through the mask onto the optical fibre such that the fibre material is ablated from an area thereof exposed to the radiation, thereby forming the required cavity, in such a way that at least one sidewall of the cavity has a desired inclination relative to a chosen axis.

Preferably, the fluence (defined as the energy density of ablating laser radiation incident per unit cross sectional area on the optical fibre) of the laser radiation projected onto the fibre is controlled so as to produce the desired inclination of the or each side wall.

Preferably, the laser is controlled to emit pulsed radiation at a fluence of 8J/cm².

Preferably, the laser is controlled to emit pulsed radiation at a fluence greater than 8J/cm².

Desirably, the focus of the radiation projected onto the fibre is selected such that the desired inclination of the or each sidewall is achieved.

Preferably, the position of the optical fibre relative to the ablating radiation is modulated, by moving it up or down relative to the ablating radiation.

Preferably, the radiation that is used to irradiate the mask is subjected to demagnification. Desirably, the demagnification ratio is chosen to ensure that the energy density of the ablating laser radiation is greater in magnitude than the ablation threshold of the fibre material.

The optical fibre may also comprise other materials that are suitable for use in optical applications, such as chalcogenides and ceramics.

The cavity formed is used as Fabry-Perot etalon

Preferably, after forming the cavity, material having selected characteristics is inserted into the cavity. The inserted material may react to the presence of a chemical compound or a change in pH level or a change in temperature or to light in the cavity. Optodes, i.e. electrodes that display sensitivity, and react optically, to particular external perturbation may be produced by inserting a material with appropriate characteristics into a cavity produced by this method.

The laser may be an excimer laser that is controlled to emit radiation of excimer wavelengths, preferably at 157nm, 193nm, 248nm, or wavelengths between 193nm and 248nm. Ablation of the optical fibre may also be performed using a deep UV source that is able to produce the desired fluence.

Reference will now be made, by way of example, to the accompanying drawings, in which:
Fig. 1 is a schematic diagram illustrating an apparatus suitable for carrying out the method of the present invention;
Fig. 2 shows two shapes of cavity that can be formed in an optical fibre using a method embodying the present invention;
Fig. 3 is a graph showing the three-dimensional comparative profile of a cavity formed in an optical sapphire disk;

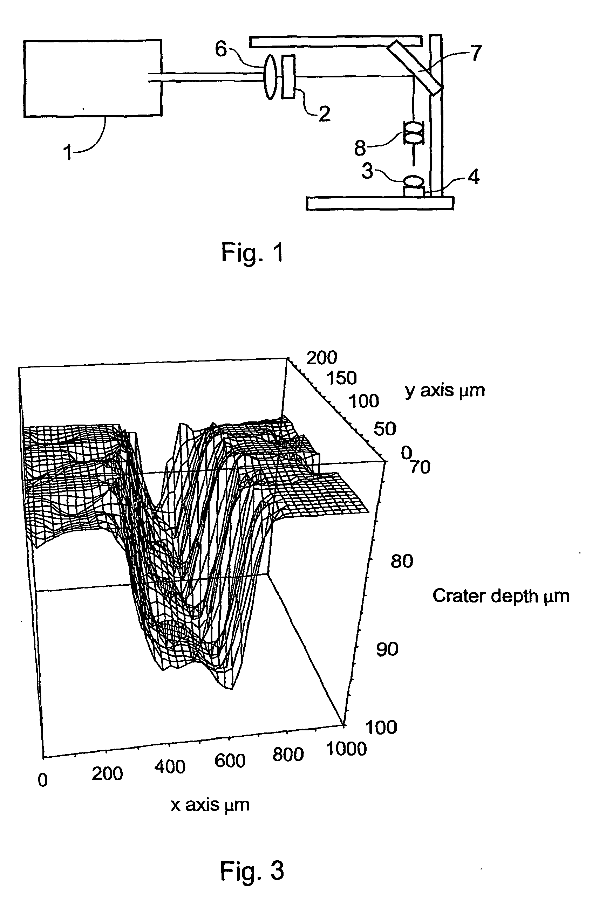

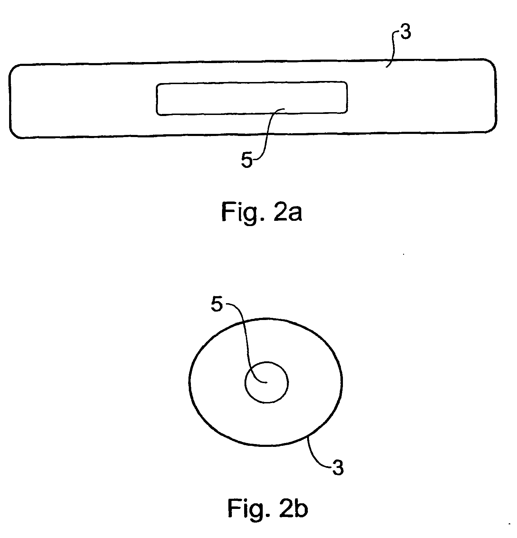

As shown in Figure 1, an apparatus suitable for carrying out the method of the present invention comprises a laser 1 that is controlled to emit radiation which is used for irradiating a mask 2 whose surface is patterned in accordance with the desired shape of a cavity 5 (see Fig. 2) to be formed in an optical fibre 3. The optical fibre 3 is mounted on a micropositioner 4, which facilitates positioning of the optical fibre 3 relative to the ablating laser radiation.

The laser radiation that is used for irradiating the mask 2 is subjected to demagnification by a condenser lens 6.

The laser radiation that is transmitted through the mask 2 is projected onto the optical fibre 3, via projecting means comprising a mirror 7 and a doublet 8, in such a way that fibre material is thereby ablated from an area thereof exposed to the radiation, to form a cavity 5 in such a way that the cavity is of the required depth and that at least one of its sidewalls has a desired inclination relative to a chosen axis.

A cavity can be produced whose adjacent sidewalls are, for example, parallel, or tapered, with respect to each other. This can be achieved by controlling the fluence of the laser radiation projected onto the fibre so as to be at an appropriate level. It can also be achieved by appropriate selection and/or adjustment of the focus of the ablating radiation projected onto the fibre, for example, by selection and/or adjustment of the focussing optics or modulating the position of the optical fibre relative to the ablating radiation by moving the optical fibre up or down relative to the ablating radiation during the ablation process.

In this manner, cavities of any desired shape may be formed in an optical fibre; two examples are shown in Figure 2. Figure 2a shows one possible configuration of an ablated cavity formed on the exterior of the fibre parallel to its axis. Figure 2b shows the fibre with an ablated cavity formed concentrically with the axis of the fibre. Each of the configurations shown allows the direct production of temperature, strain and pressure optodes along with vibration optodes (using a cantilevered beam). Figure 2b is particularly useful as it allows a sheet of material to be placed over the end of the cavity 5 to act as a diaphragm enabling the measurement of pressure. As a comparative example the three-dimensional profile of a cavity produced in a sapphire disk is shown in Figure 3. A surface roughness of significantly less than 5µm is possible, for example, roughness average (Rₐ) values of 0.451µm have been measured for pitted silica surfaces produced using the present method.

The laser 1 is preferably an excimer laser whose power is tunable. It is controlled to emit radiation at excimer wavelengths, preferably at 157nm, 193nm, 248nm or wavelengths between 193nm and 248nm, for a time period determined by the rate of ablation of the fibre material concerned, and the desired depth of the cavity to be formed. Alternatively, laser 1 may also be a deep UV laser that is controlled to emit radiation of deep UV wavelengths of the desired fluence.

The ablation rate of the fibre material depends on factors such as the fluence and the surface condition (Rₐ value) of the fibre. For example, Ihlemann at al. (Applied Surface Science, 106, p. 282 - 286, 1996) found that the ablation rate of silica when using 193nm excimer radiation in the form of 18ns pulses and at a fluence of 4J/cm² is approximately 200nm/pulse and approximately 300nm/pulse when using 248nm excimer radiation in the form of 24ns pulses and at a fluence of 15J/cm². Comparatively the ablation rate of sapphire when using 193nm excimer radiation in the form of 18ns pulses and at a fluence of 4J/cm² is approximately 25nm/pulse and approximately 100mm/pulse when using 248nm excimer radiation in the form of 24ns pulses and at a fluence of 5J/cm². Their data also showed that the ablation rate of the material is additionally dependent on the pulse width of the ablating laser radiation, which can be adjusted to either increase or decrease the ablation rate of the fibre surface in real time.

The ablation threshold values for silica and, comparatively, sapphire, when 193nm excimer excitation is used, are approximately 4J/cm² and 2J/cm², respectively. When 248nm excimer excitation is used, the ablation threshold values for silica and sapphire are approximately 12J/cm² and 3J/cm², respectively.

The mask 2 is produced by photo-etching the surface of a chromium-backed silica plate in accordance with the desired shape of the cavity. Masks of the required kind can be obtained from Central Microstructure facility, Rutherford Appleton Laboratory, University of Oxford, UK, and Compugraphics International Ltd, UK.

The condenser lens 6, which has a focal length of 450mm, demagnifies the radiation that is used for irradiating the mask 2. The demagnification ratio is chosen to ensure that the energy density of the ablating laser radiation is greater in magnitude than the ablation threshold of the fibre material. The demagnifying action of the said condenser lens 6 determines the power of laser radiation that is used for ablation of the optical fibre 3. For example, 10:1 demagnification reduces the area irradiated by a factor of 100, so that if the energy emitted by the laser 1 is 500mJ/cm², the optical fibre 3 receives 50J/cm².

The doublet 8 focuses the radiation transmitted through the mask 2 onto the optical fibre 3.

The mirror 7 focuses the radiation transmitted through the mask 2 onto the doublet 8.

Ablation of the optical fibre 3 using a method embodying the present invention can result in cavities with rough surfaces, particularly when 193nm, or 248nm, excimer wavelength radiation is used. The photon energy of light at these wavelengths is not sufficient to break bonds within the material comprised in the optical fiber 3 (especially if the material is fused silica). Thus, multi-photon absorption and higher fluence values are required to achieve ablation of the optical fibre 3, which factors serve to roughen the surfaces of the cavities that are consequently produced and cause the inappropriate reflection of light by the surfaces of such cavities. It may be possible to produce cavities with smoother surfaces by using 157nm excimer wavelength laser radiation in a method embodying the present invention as single photon absorption may be sufficient for ablating the optical fibre 3 at this wavelength value.

In order to minimise the surface roughness of cavities produced using a method embodying the present invention, a further processing step is introduced after such cavity production, in which the fibre is subjected to etching (by using a suitable etchant, for example, hydrofluoric acid) or annealing at a temperature close to the melting point of the material constituting the optical fibre 3, which causes the material to re-flow, and, consequently, to reduce the roughness of the cavity surfaces. Alternatively, reactive-ion etching, or focussed-ion-beam milling, can be used to smooth the surfaces of a cavity that is initially formed using a method embodying the present invention.

After formation of the cavity in the optical fibre 3 by use of the present invention, material of specific characteristics may be inserted into the cavity. For example, material which reacts to a change in temperature or pH level, or which reacts to light or the presence of a chemical compound, may be used. In this way, optodes sensitive to particular external perturbation may be produced by inserting a material with appropriate characteristics into the cavity.

## Claims

1. A method for manufacturing a Fabry-Perot etalon, which method comprises the steps of:
forming a cavity (5) of a desired shape in an optical fibre (3) of silica material by irradiating, with radiation from a laser source(1), a mask (2) whose surface is patterned in accordance with the desired shape of the cavity; and
projecting the radiation transmitted through the mask onto the optical fibre such that the fibre material is ablated from an area thereof exposed to the radiation, thereby forming the required cavity, in such a way that at least one sidewall of the cavity has a desired inclination relative to a chosen axis.

2. A method as claimed in claim 1, wherein the fluence of the laser radiation projected onto the fibre (3) is controlled so as to produce the desired inclination of the or each side wall.

3. A method as claimed in claim 2, wherein the laser (1) is controlled to emit pulsed radiation at a fluence of 8J/cm².

4. A method as claimed in claim 2, wherein the laser(1) is controlled to emit pulsed radiation at a fluence greater than 8J/cm².

5. A method as claimed in any preceding claim, wherein the focus of the ablating radiation projected onto the fibre (3) is selected and/or adjusted such that the desired inclination of the or each sidewall is achieved.

6. A method as claimed in claim 5, wherein the position of the optical fibre an (3) relative to the ablating radiation is modulated, by moving the optical substrate up or down relative to the ablating radiation.

7. A method as claimed in claim 1, wherein the radiation that is used to irradiate the mask (2) is subjected to demagnification prior to being projected onto the fibre (3).

8. A method as claimed in claim 7, wherein the demagnification ratio is chosen to ensure that the energy density of the ablating laser radiation is greater, in magnitude than the ablation threshold of the fibre material (3).
wherein the optical subatrate is in the form optical fibre.

9. A method as claimed in any one of claims 1 to 8, wherein the optical fibre 3 also comprises material that is suitable for optical applications.

10. A method as claimed in claim 9, wherein the material is chalcogenide or ceramic.

11. A method as claimed in any preceding claim, wherein, after forming the cavity(5), material having selected characteristics is inserted into the cavity to form an optode that is sensitive to external perturbation, the sensitivity of the said optode being determined by the characteristics of the material inserted into the cavity.

12. A method as claimed in claim 11, wherein the inserted material reacts to the presence of a chemical compound.

13. A method as claimed in claim 11, wherein the inserted material reacts to a change in pH level.

14. A method as claimed in claim 11, wherein the inserted material reacts to a change in temperature.

15. A method as claimed in claim 11, wherein the inserted material reacts to light.

16. A method as claimed in any preceding claim, wherein the laser (1) is an excimer laser that is controlled to emit radiation of excimer wavelengths.

17. A method as claimed in any preceding claim, wherein the laser (1) is controlled to emit radiation of 157nm wavelength.

18. A method as claimed in any preceding claim, wherein the laser (1) is controlled to emit radiation of 193nm wavelength.

19. A method as claimed in any preceding claim, wherein the laser (1) is controlled to emit radiation of 248 nm wavelength.

20. A method as claimed in any preceding claim, wherein the laser (1) is controlled to emit pulsed radiation between 193nm and 248nm wavelengths.

21. A method as claimed in any one of claims 1 to 15, wherein the laser (1) is a deep UV laser that is controlled to emit radiation of deep UV wavelengths.

## Patentansprüche

1. Verfahren zur Herstellung eines Fabry-Porot-Etalons (Eich- oder Normalmaß), **gekennzeichnet durch** die folgenden Schritte:
- Ausbildung eines Hohlraums (5) gewünschter Form in einer optischen Faser (35) aus Siliziummaterial **durch** Bestrahlung mit einer Laserquelle (1), einer Maske (2), deren Oberfläche gemäß der gewünschten Form des Hohlraums ausgeführt ist, und
- Abbildung der **durch** die Maske übertragenen Strahlung auf der optischen Faser derart, daß das Fasermaterial von einem Bereich der Faser, der der Strahlung ausgesetzt ist, abgetragen wird, um **dadurch** den gewünschten Hohlraum zu schaffen, wobei wenigstens eine Seitenwand des Hohlraums eine gewünschte Neigung in Bezug auf eine gewählte Achse aufweist.

2. Verfahren nach Anspruch 1, **dadurch gekennzeichnet, daß** der Fluß der Laserstrahlung, die auf die Faser (3) fällt, so gesteuert wird, daß die gewünschte Neigung der oder jeder Seitenwand erzeugt wird.

3. Verfahren nach Anspruch 2, **dadurch gekennzeichnet, daß** der Laser (1) so gesteuert wird, daß er eine gepulste Strahlung bei einem Fluß von 8 J/cm² abgibt.

4. Verfahren nach Anspruch 2, **dadurch gekennzeichnet, daß** der Laser (1) so gesteuert wird, daß er eine gepulste Strahlung bei einem Fluß größer als 8 J/cm² abgibt.

5. Verfahren nach einem der vorhergehenden Ansprüche, **dadurch gekennzeichnet, daß** der Brennpunkt der abtragenden Strahlung, der auf die Faser (3) gerichtet ist, so gewählt und/oder fixiert wird, daß die gewünschte Neigung der oder jeder Seitenwand erreicht wird.

6. Verfahren nach Anspruch 5, **dadurch gekennzeichnet, daß** die Lage der optischen Faser (3) in Bezug auf die abtragende Strahlung gesteuert wird, indem das optische Substrat in Bezug auf die abtragende Strahlung auf- oder abbewegt wird.

7. Verfahren nach Anspruch 1, **dadurch gekennzeichnet, daß** die Strahlung, die zur Bestrahlung der Maske (2) benutzt wird, geschwächt wird, bevor sie auf die Faser (3) projiziert wird.

8. Verfahren nach Anspruch 7, **dadurch gekennzeichnet, daß** das Schwächungsverhältnis so gewählt wird, daß sichergestellt ist, daß die Energiedichte der abtragenden Laserstrahlung größer ist als die Abtragungsschwelle des Fasermaterials (3).

9. Verfahren nach einem der vorhergehenden Ansprüche 1 bis 8, **dadurch gekennzeichnet, daß** die optische Faser (3) auch Material ist, das für optische Anwendungsfälle geeignet ist.

10. Verfahren nach Anspruch 9, **dadurch gekennzeichnet, daß** das Material Chalcogenid oder Keramik ist.

11. Verfahren nach einem der vorhergehenden Ansprüche, **dadurch gekennzeichnet, daß** nach der Bildung des Hohlraums (5) Material mit ausgewählten Eigenschaften in den Hohlraum eingefüllt wird, um eine Optode zu bilden, die für äußere Störungen empfindlich ist, wobei die Empfindlichkeit der Optode durch die Eigenschaften des in den Hohlraum eingefüllten Materials bestimmt wird.

12. Verfahren nach Anspruch 11, **dadurch gekennzeichnet, daß** das eingefüllte Material auf das Vorhandensein einer chemischen Verbindung reagiert.

13. Verfahren nach Anspruch 11, **dadurch gekennzeichnet, daß** das eingefüllte Material auf eine Änderung des pH-Wertes reagiert.

14. Verfahren nach Anspruch 11, **dadurch gekennzeichnet, daß** das eingefüllte Material auf eine Temperaturveränderung reagiert.

15. Verfahren nach Anspruch 11, **dadurch gekennzeichnet, daß** das eingefüllte Material auf Licht reagiert.

16. Verfahren nach einem der vorhergehenden Ansprüche, **dadurch gekennzeichnet, daß** der Laser (1) ein Kaltlichtlaser ist, der so gesteuert wird, daß er Strahlung mit Kaltlichtlaserwellenlängen emittiert.

17. Verfahren nach einem der vorhergehenden Ansprüche, **dadurch gekennzeichnet, daß** der Laser (1) so gesteuert wird, daß er Strahlung einer 157 nm Wellenlänge emittiert.

18. Verfahren nach einem der vorhergehenden Ansprüche, **dadurch gekennzeichnet, daß** der Laser (1) so gesteuert wird, daß er Strahlung einer 193 nm Wellenlänge emittiert.

19. Verfahren nach einem der vorhergehenden Ansprüche, **dadurch gekennzeichnet, daß** der Laser (1) so gesteuert wird, daß er Strahlung einer 248 nm Wellenlänge emittiert.

20. Verfahren nach einem der vorhergehenden Ansprüche, **dadurch gekennzeichnet, daß** der Laser (1) so gesteuert wird, daß er gepulste Strahlung zwischen 193 nm und 248 nm Wellenlänge emittiert.

21. Verfahren nach einem der vorhergehenden Ansprüche 1 bis 15, **dadurch gekennzeichnet, daß** der Laser (1) ein Tief-UV-Laser ist, der so gesteuert wird, daß er Strahlung tiefer UV-Wellenlängen emittiert.

## Revendications

1. Procédé de fabrication d'un étalon de Fabry-Pérot, lequel procédé comprend les étapes consistant à :
- former une cavité (5) d'une forme désirée dans une fibre optique (3) faite d'une matière de silice par irradiation, avec un rayonnement provenant d'une source laser (1), d'un masque (2) dont la surface est à motifs conformément à la forme désirée de la cavité ; et
- projeter le rayonnement transmis à travers le masque sur la fibre optique de telle sorte que la matière de fibre subisse une ablation à partir d'une zone de celle-ci exposée au rayonnement, formant de cette façon la cavité requise, d'une manière telle qu'au moins une paroi latérale de la cavité ait une inclinaison désirée par rapport à un axe choisi.

2. Procédé selon la revendication 1, dans lequel la fluence du rayonnement laser projeté sur la fibre (3) est contrôlée de façon à produire l'inclinaison désirée de la ou de chaque paroi latérale.

3. Procédé selon la revendication 2, dans lequel le laser (1) est contrôlé pour émettre un rayonnement pulsé à une fluence de 8 J/cm².

4. Procédé selon la revendication 2, dans lequel le laser (1) est contrôlé pour émettre un rayonnement pulsé à une fluence supérieure à 8 J/cm².

5. Procédé selon l'une quelconque des revendications précédentes, dans lequel le foyer du rayonnement d'ablation projeté sur la fibre (3) est choisi et/ou ajusté de telle sorte que l'inclinaison désirée de la ou de chaque paroi latérale est obtenue.

6. Procédé selon la revendication 5, dans lequel la position de la fibre optique (3) par rapport au rayonnement d'ablation est modulée, par déplacement du substrat optique vers le haut ou vers le bas par rapport au rayonnement d'ablation.

7. Procédé selon la revendication 1, dans lequel le rayonnement qui est utilisé pour irradier le masque (2) est soumis à une réduction avant d'être projeté sur la fibre (3).

8. Procédé selon la revendication 7, dans lequel le rapport de réduction est choisi pour assurer que la densité d'énergie du rayonnement laser d'ablation est supérieure en grandeur au seuil d'ablation de la matière de fibre (3).

9. Procédé selon l'une quelconque des revendications 1 à 8, dans lequel la fibre optique (3) comprend une matière qui est appropriée pour des applications optiques.

10. Procédé selon la revendication 9, dans lequel la matière est un chalcogénure ou une céramique.

11. Procédé selon l'une quelconque des revendications précédentes, dans lequel, après formation de la cavité (5), une matière ayant des caractéristiques sélectionnées est introduite dans la cavité pour former une optrode qui est sensible à une perturbation externe, la sensibilité de ladite optrode étant déterminée par les caractéristiques de la matière introduite dans la cavité.

12. Procédé selon la revendication 11, dans lequel la matière introduite réagit à la présence d'un composé chimique.

13. Procédé selon la revendication 11, dans lequel la matière introduite réagit à un changement du niveau de pH.

14. Procédé selon la revendication 11, dans lequel la matière introduite réagit à un changement de température.

15. Procédé selon la revendication 11, dans lequel la matière introduite réagit à la lumière.

16. Procédé selon l'une quelconque des revendications précédentes, dans lequel le laser (1) est un laser excimère qui est contrôlé pour émettre un rayonnement de longueurs d'onde d'excimère.

17. Procédé selon l'une quelconque des revendications précédentes, dans lequel le laser (1) est contrôlé pour émettre un rayonnement d'une longueur d'onde de 157 nm.

18. Procédé selon l'une quelconque des revendications précédentes, dans lequel le laser (1) est contrôlé pour émettre un rayonnement d'une longueur d'onde de 193 nm.

19. Procédé selon l'une quelconque des revendications précédentes, dans lequel le laser (1) est contrôlé pour émettre un rayonnement d'une longueur d'onde de 248 nm.

20. Procédé selon l'une quelconque des revendications précédentes, dans lequel le laser (1) est contrôlé pour émettre un rayonnement pulsé entre des longueurs d'onde de 193 nm et 248 nm.

21. Procédé selon l'une quelconque des revendications 1 à 15, dans lequel le laser (1) est un laser à UV lointain qui est contrôlé pour émettre un rayonnement de longueurs d'onde UV lointain.
